# EUROPEAN PATENT APPLICATION

(11) **EP 1 168 061 A2**
(43) Date of publication of application: **02.01.2002**
(21) Application number: 01111878.3
(22) Date of filing: 16.05.2001
(51) Int. Cl.: G03B 42/02, G01T 1/29

(54) **Radiation image read-out apparatus**

(30) Priority: 17.05.2000 JP 2000145001
(71) Applicant: Fuji Photo Film Co., Ltd., Kanagawa-ken (JP)
(72) Inventor: Isoda, Yuji, Ashigarakami-gun, Kanagawa (JP)
(74) Representative: Klunker . Schmitt-Nilson . Hirsch

(57) **Abstract**

A radiation image read-out apparatus includes a stimulating light beam source, and a photodetector which receives stimulated emission emitted upon exposure to the stimulating light beam from portions of the stimulable phosphor sheet exposed to the stimulating light beam or the back side of the sheet opposed to the portions exposed to the stimulating light beam and converts the amount of stimulated emission to an electric signal. The photodetector comprises a CCD provided with a protective member which is permeable to light in the wavelength band of the stimulated emission and impermeable to light in the wavelength band of the stimulating light.

## Description

### BACKGROUND OF THE INVENTION

### Field of the Invention

This invention relates to a radiation image read-out apparatus which reads out a radiation image stored on a stimulable phosphor sheet by the use of a photodetector.

### Description of the Related Art

When certain kinds of phosphor are exposed to a radiation, they store a part of energy of the radiation. Then when the phosphor which has been exposed to the radiation is exposed to stimulating rays such as visible light or a laser beam, light is emitted from the phosphor in proportion to the stored energy of the radiation. A phosphor exhibiting such properties is generally referred to as "a stimulable phosphor". In this specification, the light emitted from the stimulable phosphor upon stimulation thereof will be referred to as "stimulated emission". There has been known a radiation image read-out apparatus in which a stimulating light beam such as a laser beam is caused to scan a stimulable phosphor sheet (a sheet provided with a layer of the stimulable phosphor) which has been exposed to a radiation passing through an object such as a human body to have a radiation image of the object stored on the stimulable phosphor sheet, the stimulated emission emitted from the stimulable phosphor sheet pixel by pixel is photoelectrically detected, thereby obtaining an image signal (a radiation image signal), and then the stimulable phosphor sheet is exposed to erasing light after the image signal is obtained from the stimulable phosphor sheet so that the residual energy of the radiation is fully released from the stimulable phosphor sheet.

The radiation image signal thus obtained is subjected to image processing such as gradation processing and/or frequency processing and a radiation image of the object is reproduced as a visible image on the basis of the processed radiation image signal on a recording medium such as a photographic film or a display such as a CRT. When the stimulable phosphor sheet is exposed to erasing light, the residual energy of the radiation is fully released from the stimulable phosphor sheet and the stimulable phosphor sheet comes to be able to store a radiation image again, whereby the stimulable phosphor sheet can be repeatedly used.

In the radiation image read-out apparatus, a line light source such as a fluorescent lamp, a cold cathode fluorescent lamp, an LED array or the like which projects a line beam onto the stimulable phosphor sheet is used as a stimulating light source and a line sensor having a linear array of photoelectric convertor elements is used as a means for photoelectrically reading out the stimulated emission. The line beam is moved relative to the stimulable phosphor sheet and the line sensor in the direction perpendicular to the longitudinal direction of the line beam by a scanning means. By the use of a line beam and a line sensor, the reading time is shortened, the overall size of the apparatus can be reduced and the cost can be reduced. See, for instance, Japanese Unexamined Patent Publication Nos. 60(1985) -111568, 60(1985) -236354, and 1(1989) -101540.

In the conventional radiation image read-out apparatus, there has been a problem that the stimulating light is detected in addition to the stimulated emission, which generates noise in the image signal obtained.

### SUMMARY OF THE INVENTION

In view of the foregoing observations and description, the primary object of the present invention is to provide a radiation image read-out apparatus which can prevent the stimulating light from entering the line sensor.

In accordance with the present invention, there is provided a radiation image read-out apparatus comprising a stimulating light beam source which projects a stimulating light beam onto a stimulable phosphor sheet storing thereon radiation image information, a photodetector which receives stimulated emission emitted upon exposure to the stimulating light beam from portions of the stimulable phosphor sheet exposed to the stimulating light beam or the back side of the sheet opposed to the portions exposed to the stimulating light beam and converts the amount of stimulated emission to an electric signal, a scanning means which moves the stimulating light beam source and the photodetector relatively to the stimulable phosphor sheet, and an image signal read-out means which reads out the output of photodetector in sequence in the respective positions in which the stimulating light beam and the photodetector are moved by the scanning means, wherein the improvement comprises that
the photodetector comprises a CCD provided with a protective member which is permeable to light in the wavelength band of the stimulated emission and impermeable to light in the wavelength band of the stimulating light.

The protective member may be formed, for instance, glass or plastic.

When the stimulating light beam is in a red region and the stimulated emission is in a blue region, it is necessary for the protective member to be permeable to at least blue light. In this case, the protective member may be formed of, for instance, B-390 (transmission wavelength band is near to 390nm) or B-410 (transmission wavelength band is near to 410nm) both available from HOYA.

It is preferred that the protective member be permeable only to light in the wavelength band of the stimulated emission.

It is preferred that the stimulating light beam source be a line light beam source which projects onto the stimulable phosphor sheet a line stimulating light beam,
the photodetector be a line sensor comprising a plurality of photoelectric convertor elements arranged in the longitudinal direction of the line stimulating light beam projected onto the stimulable phosphor sheet,
the scanning means moves the line light beam source and the line sensor relatively to the stimulable phosphor sheet in a direction different from the longitudinal direction of the line stimulating light beam projected onto the stimulable phosphor sheet, and
the image signal read-out means reads out the output of line sensor in sequence in the respective positions in which the line stimulating light beam source and the line sensor are moved by the scanning means.

It is preferred that the line sensor be provided with a plurality of photoelectric convertor elements also in the direction perpendicular to the longitudinal direction of the line stimulating light beam projected onto the stimulable phosphor sheet.

The front illumination type CCD sensor which has been generally employed is low (almost 0) in quantum efficiency (sensitivity) in an ultraviolet to blue region and is unsatisfactory to detect weak blue stimulated emission. As a result, a low quality image signal which is very low in S/N is obtained. As the line sensor, a back illumination type CCD sensor is preferred.

In the front illumination type CCD sensor, light is caused to impinge upon the front face of the sensor. To the contrast, in the back illumination type CCD sensor, the back face is cut and light is caused to impinge upon the back face of the sensor.

The front illumination type CCD sensor is very low in sensitivity to light in a low wavelength range, e.g., blue light, due to a protective layer of Si or the like. The back illumination type CCD sensor is very high in sensitivity to light in a high ultraviolet to blue region relatively to the front illumination type CCD sensor. Further, the back illumination type CCD sensor is high in quantum efficiency and the sensitivity of the back illumination type CCD sensor is higher than that of the front illumination type CCD sensor not only to a high ultraviolet to blue region but also to a visible to infrared region.

By reading the radiation image information by the back illumination type CCD sensor which is high in quantum efficiency, an image signal which is at a higher level than the image signal obtained by the front illumination type CCD sensor. Asaresult, a higher quality image higher in S/N can be obtained. Further, the back illumination type is higher in both reading speed and reading accuracy than the front illumination type CCD sensor and is equivalent to a photomultiplier in reading speed and reading accuracy.

Though being high in quantum efficiency over the entire region from ultraviolet to infrared, the back illumination type CCD sensor is higher in quantum efficiency in an ultraviolet to blue region than the front illumination type CCD sensor by 50% or more. Accordingly, when the back illumination type CCD sensor is used together with a stimulable phosphor sheet emitting blue stimulated emission, the stimulated emission utilization efficiency can be markedly increased, which greatly improves the quality of the image signal obtained.

As the line stimulating light beam source, an LED, an organic EL, a fluorescent light, a high pressure sodium-vapor lamp, a cold cathode tube and the like can be employed.

The line stimulating light beam source itself need not be linear so long as the stimulating light is projected onto the stimulable phosphor sheet in the form of a line beam or an area beam. That is, the line stimulating light beam source may be provided with an optical system which shapes light emitted from the light source into a line beam. Further, a broad area laser may be employed as the linear stimulating light beam source.

The stimulating light beam may be continuously emitted from the light beam source or may be emitted therefrom in a pulse-like fashion. From the viewpoint of reduction in noise, preferably the line stimulating light beam is in the form of high output pulsed light. The wavelength of the stimulating light beam may be determined according to the kind of the stimulable phosphor sheet. For example, when the stimulable phosphor sheet is of a kind which is stimulated by red stimulating light, it is preferred that the wavelength of the stimulating light is preferably in the range of 600 to 1000nm, and more preferably 600 to 700nm.

It is preferred that the length of the line stimulating light beam on the stimulable phosphor sheet be equivalent to or larger than the length of the side of the of the stimulable phosphor sheet. In this case, the line stimulating light beam maybe projected obliquely to the side of the stimulable phosphor sheet. In order to increase the degree of convergence of the stimulating light beam on the surface of the stimulable phosphor sheet, an optical system comprising a cylindrical lens, a slit, a SELFOC lens array, an optical fiber bundle, or a combination of these elements may be provided between the stimulating light beam source and the stimulable phosphor sheet. The width of the stimulating light beam on the surface of the stimulable phosphor sheet is preferably 10 to 4000 µm.

It is preferred that a collector optical system for collecting the stimulated emission on the light receiving face of the line sensor be disposed between the stimulable phosphor sheet and the line sensor. As such a collector optical system, may be employed a refractive index profile type lens array such as a SELFOC® lens array which is formed by an imaging system where the object plane and the image plane are in one to one correspondence, a rod lens array and the like, a cylindrical lens, a slit, an optical fiber bundle or a combination of these optical elements.

In this case, it is preferred that the optical system be permeable only to light in the wavelength range of the stimulated emission.

The direction in which the scanning means moves the line stimulating light beam source and the line sensor relatively to the stimulable phosphor sheet is preferably a direction substantially perpendicular to the line stimulating light beam source and the line sensor but may be any direction so long as substantially the entire surface of the stimulable phosphor sheet can be uniformly exposed to the stimulating light beam. For example, when the line stimulating light beam source and the line sensor are longer than the side of the stimulable phosphor sheet, the scanning means may move obliquely or zigzag the line stimulating beam source and the line sensor relatively to the stimulable phosphor sheet.

It is further preferred that a stimulating light cut filter (a sharp cut filter, a band pass filter and such) which does not transmit the stimulating light but transmits the stimulated emission be provided between the stimulable phosphor sheet and the line sensor to prevent the stimulating light from entering the line sensor.

Though the line sensor may comprise photoelectric convertor elements which are arranged only in the longitudinal direction thereof , it is preferred that the line sensor comprises photoelectric convertor elements arranged in a two-dimensional array. In this case, the photoelectric convertor elements need not be arranged in a straight line in each of the longitudinal and transverse directions of the line sensor but may be arranged in other patterns. For example, the photoelectric convertor elements may be arranged zigzag in the transverse direction of the stimulated emission and arranged in a straight line in the longitudinal direction, and may be arranged zigzag in the longitudinal direction of the stimulated emission and arranged in a straight line in the transverse direction. Further, the photoelectric convertor elements may be arranged in both the longitudinal direction and the transverse direction.

When the number of photoelectric convertor elements is large to such an extent that influence of transfer rate is recognizable, shortening of charge accumulating time due to increase in charge transfer time may be avoided by once storing the charge accumulated in each photoelectric convertor element in a memory, and reading out the charge from the memory during a next charge accumulating cycle.

It is preferred that the line sensor includes not less than 1000 photoelectric convertor elements in the longitudinal direction thereof, and that the light receiving face of the line sensor be not shorter than the corresponding side of the stimulable phosphor sheet. When the light receiving face of the line sensor is longer than the corresponding side of the stimulable phosphor sheet, the line sensor may be positioned obliquely to the side of the stimulable phosphor sheet.

The line sensor may receive stimulated emission from the same side of the stimulable phosphor sheet as the side onto which the stimulating light beam is projected or from the side of the stimulable phosphor sheet opposite to the side onto which the stimulating light beam is projected. In the latter case, the support sheet on which the stimulable phosphor layer is supported should be permeable to the stimulated emission.

It is preferred that the stimulating light beam be not fluctuated in power (which governs the intensity of the stimulating light beam projected onto the stimulable phosphor sheet and the intensity of the stimulated emission emitted from the stimulable phosphor sheet upon exposure to the stimulating light beam). When the power of the stimulating light beam fluctuates, the influence of the power fluctuation can be suppressed by monitoring the amount of the stimulating light and modulating, for instance, the drive voltage of the light source so that the light emitting power (brightness) becomes constant at a speed higher than the photoelectric converting speed of the photoelectric convertor elements.

It is preferred that the stimulable phosphor sheet be provided with a protective layer which is permeable only to light of the wavelength range of the stimulated emission.

It is further preferred that said protective member is antireflection-treated.

In this case, it is preferred that the antireflection treatment is forming an antireflection multilayer film on the protective member.

The antireflection multilayer film is a film in which light repeatedly undergoes reflection and transmission between layers, and as a result only wavelengths in a particular band are transmitted through the film with other wavelengths interfere with each other. See, for instance, Japanese Unexamined Patent Publication No. 62(1987)-169095. It is preferred that the antireflection multilayer film transmits light in the wavelength range of the stimulated emission while causing light in the wavelength range of the stimulating light to interfere. The multilayer film may have an effect to provide directivity to light.

Such an antireflection multilayer film may be formed by repeating deposition of dielectric films such as of SiO₂ or TiO₂. Each film is several hundreds nm in thickness, and the thickness of each film is determined according to the wavelengths to be transmitted and to be caused to interfere.

In accordance with the present invention, since the photodetector comprises a CCD provided with a protective member which is permeable to light in the wavelength band of the stimulated emission and impermeable to light in the wavelength band of the stimulating light, the stimulating light cannot impinge upon the photodetector, the image signal obtained is free from noise generated by the stimulating light.

Especially when the protective member is permeable only to light in the wavelength band of the stimulated emission, the image signal obtained is further free from noise generated by other light such as external light.
When a collector optical system such as a refractive index profile type lens array for collecting the stimulated emission on the light receiving face of the line sensor is disposed between the stimulable phosphor sheet and the line sensor, more stimulated emission can be collected on the line sensor. Further, when the optical system is permeable only to light in the wavelength range of the stimulated emission, light other than light in the wavelength range of the stimulated emission is prevented from impinging upon the line sensor and accordingly the image signal obtained is further free from noise generated by other light such as external light.

When the stimulable phosphor sheet is provided with a protective layer which is permeable only to light of the wavelength range of the stimulated emission, light other than light in the wavelength range of the stimulated emission is prevented from impinging upon the line sensor and accordingly the image signal obtained is further free from noise generated by other light such as external light.

Further, when the protective member is antireflection-treated, the line sensor can detect the stimulated emission without reflection, the stimulated emission detecting efficiency can be increased.

### BRIEF DESCRIPTION OF THE DRAWINGS

Figure 1A is a schematic perspective view of a radiation image read-out apparatus in accordance with an embodiment of the present invention,
Figure 1B is a schematic side view of the radiation image read-out apparatus shown in Figure 1A,
Figure 2 is a view showing in detail the line sensor employed in the radiation image read-out apparatus shown in Figures 1A and 1B,
Figure 3 is a cross-sectional view taken along line II-II in Figure 2,
Figure 4 is a schematic side view of a radiation image read-out apparatus in accordance with another embodiment of the present invention, and
Figure 5 is a schematic side view of a radiation image read-out apparatus in accordance with still another embodiment of the present invention.

### DESCRIPTION OF THE PREFERRED EMBODIMENT

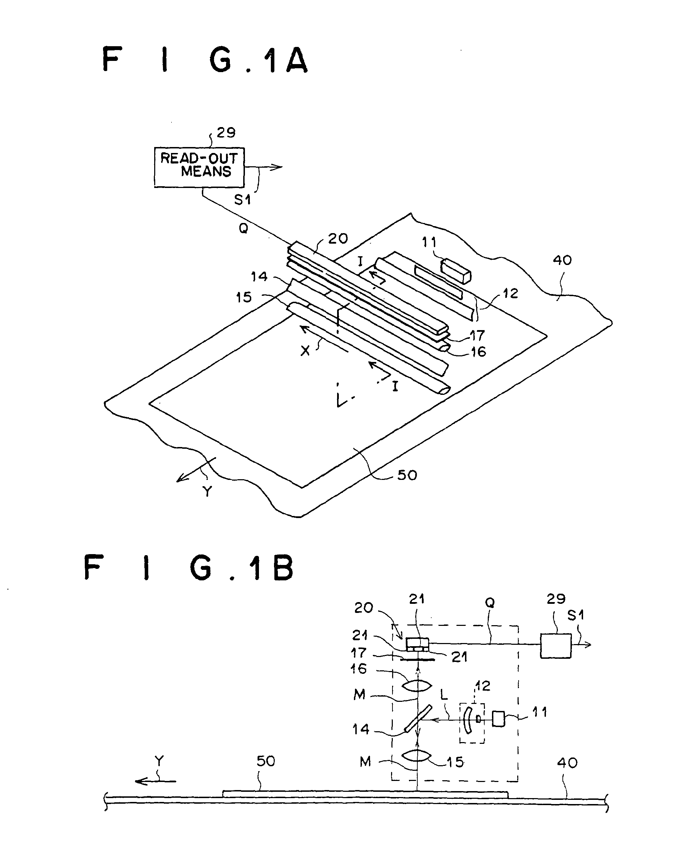

In Figures 1A and 1B, a radiation image read-out apparatus in accordance with a first embodiment of the present invention comprises an endless belt (a scanning means) 40 which conveys a stimulable phosphor sheet 50 (storing thereon a radiation image) in the direction of arrow Y; a broad area laser 11 which emits a line stimulating light beam L 100µm wide substantially in parallel to the surface of the stimulable phosphor sheet 50; an optical system 12 formed by a combination of a collimator lens which condenses the line stimulating light beam L emitted from the broad area laser 11 and a toric lens which spreads the light beam only in one direction; a dichroic mirror 14 which is inclined at 45° to the surface of the stimulable phosphor sheet 50 and transmits stimulated emission M while reflecting the line stimulating light beam L; a first SELFOC lens array 15 which is an array of a plurality of refractive index profile type lenses, converges the line stimulating light beam L reflected by the dichroic mirror 14 to impinge upon the stimulable phosphor sheet 50 in a pattern of a line about 100µm wide extending in the direction of arrow X and collimates into a parallel light bundle stimulated emission M emitted from the part of the stimulable phosphor sheet 50 exposed to the line stimulating light beam; a second SELFOC lens array 16 which converges the stimulated emission M which passes through the dichroic mirror 14 onto the light receiving face of a line sensor 20; a stimulating light cut filter 17 which cuts the stimulating light L in the stimulated emission M passing through the second SELFOC lens array 16; the line sensor 20 which has an array of photoelectric convertor elements 21 which receive the stimulated emission M and convert it into an electric image signal; and an image signal reading means 29 which reads outputs of the respective photoelectric convertor elements 21 in sequence as the stimulable phosphor sheet 50 is moved and outputs an image signal S1 representing a radiation image stored on the stimulable phosphor sheet 50.

The first SELFOC lens array 15 images a light emitting region of the stimulable phosphor sheet 50 on the dichroic mirror 14 in a natural size, and the second SELFOC lens array 16 transfers the image of the light emitting region of the stimulable phosphor sheet 50 on the dichroic mirror 14 to the light receiving face of the line sensor 20 in a natural size.

The optical system 12 formed by the collimator lens and the toric lens enlarges the image of the line stimulating light beam L from the broad area laser 11 to a desired size, thereby changing the irradiation size.

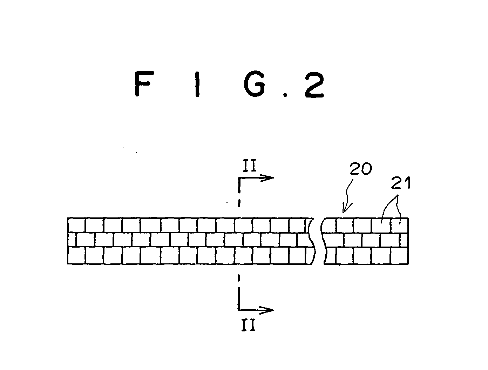

The line sensor 20 is of a back illumination type. As shown in Figure 2, the line sensor 20 comprises three photoelectric convertor element arrays. Each photoelectric convertor element array comprises a number of (e.g., 1000 or more) photoelectric convertor elements 21 arranged in the direction of arrow X. The three arrays are arranged zigzag in the direction of conveyance of the stimulable phosphor sheet 50 (the direction of arrow Y). Each photoelectric convertor element 21 has a light receiving face which is about 100 µm ×100 µm in size. This size is a size to receive stimulated emission M emitted from an area of about 100 µm×100 µ m of the stimulable phosphor sheet 50.

The back illumination type CCD sensor is higher in quantum efficiency than the front illumination type CCD sensor, which has been conventionally used, over the entire range from ultraviolet to infrared. Accordingly, in this embodiment, an image signal which is higher in level and S/N can be obtained. The front illumination type CCD sensor is almost 0 in quantum efficiency in an ultraviolet to blue region. To the contrast, the back illumination type CCD sensor is as high as about 50% in quantum efficiency in an ultraviolet to blue region. Accordingly, when the back illumination type CCD sensor is used together with a stimulable phosphor sheet emitting blue stimulated emission, the stimulated emission utilization efficiency can be markedly increased, which greatly improves the quality of the image signal obtained.

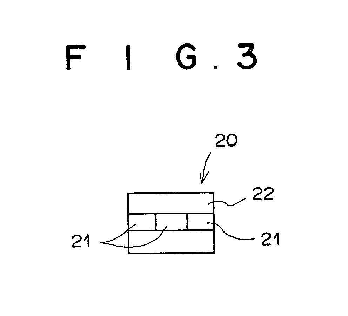

As shown in Figure 3, the photoelectric convertor elements 21 (the back illumination type CCD sensor) are sandwiched between protective glass layers 22. The protective glass layers 22 are permeable to light in the wavelength range of the stimulated emission M and impermeable to light in the wavelength of the stimulating light L. For example, when the stimulating light L is red and the stimulated emission M is blue, the protective glass layers 22 are formed of blue glass to be permeable to light in a blue region. Forexample, the protective glass layers 22 may be formed of, for instance, B-390 (transmission wavelength band is near to 390nm) or B-410 (transmission wavelength band is near to 410nm) both available from HOYA. The surface of the protective glass layers 22 may be antireflection-treated.

As the antireflection treatment, an antireflection multilayer film may be provided on the surface of the protective glass layers 22. The antireflection multilayer film is a film in which light repeatedly undergoes reflection and transmission between layers, and as a result only wavelengths in a particular band are transmitted through the film with other wavelengths interfere with each other. See, for instance, Japanese Unexamined Patent Publication No. 62(1987)-169095. In this particular embodiment, it is preferred that the antireflection multilayer film transmits light in the wavelength range of the stimulated emission M while causing light in the wavelength range of the stimulating light L to interfere. The multilayer film may have an effect to provide directivity to light.

Such an antireflection multilayer film may be formed by repeating deposition of dielectric films such as of SiO₂ or TiO₂. Each film is several hundreds nm in thickness, and the thickness of each film is determined according to the wavelengths to be transmitted and to be caused to interfere.

Operation of the radiation image read-out apparatus of this embodiment will be described, hereinbelow.

The endless belt 40 is driven to convey the stimulable phosphor sheet 50 stored thereon a radiation image in the direction of arrow Y in Figure 1A. While the broad area laser 11 emits a line stimulating light beam L substantially in parallel to the surface of the stimulable phosphor sheet 50. The line stimulating light beam L is converted to a parallel light beam by the optical system 12 (the collimator lens and the toric lens) and reflected by the dichroic mirror 14 to impinge upon the stimulable phosphor sheet 50 in perpendicular thereto after condensed by the first SELFOC lens array 15 into a line beam about extending in the direction of arrow X on the surface of the stimulable phosphor sheet 50.

The line stimulating light beam L impinging upon the stimulable phosphor sheet 50 stimulates the stimulable phosphor in the irradiated area and at the same time is scattered inside the stimulable phosphor sheet 50 to stimulate also the stimulable phosphor near the irradiated area. As a result, the stimulated emission M is emitted from the irradiated area and the area adjacent thereto in proportion to the amount of radiation energy stored thereon.

The stimulated emission M is made to a parallel light bundle by the first SELFOC lens array 15, is transmitted through the dichroic mirror 14 and enters the second SELFOC lens array 16. Then the stimulated emission M is converged onto the light receiving faces of photoelectric convertor elements 21 by the second SELFOC lens array 16. At this time, the stimulating light beam L reflected by the surface of the stimulable phosphor sheet 50 is cut by the stimulating light cut filter 17.

The line sensor 20 converts the amount of the stimulated emission M as received by each of the photoelectric convertor elements 21 to an electric signal Q and inputs the electric signal Q into the image signal reading means 29. Since the photoelectric convertor elements 21 of the line sensor 20 are covered with the protective glass layers 22 which are permeable to light in the wavelength range of the stimulated emission M and impermeable to light in the wavelength of the stimulating light L, the part of the stimulating light L which accidentally passes through the stimulating light cut filter 17 is further cut by the protective glass layers 22.

The image signal reading means 29 digitizes the electric signal Q and stores the digitized electric signal together with the position on the stimulable phosphor sheet 50. Then when the electric signal Q is obtained for the entire area of the stimulable phosphor sheet 50, the image signal reading means 29 outputs an image signal S representing the radiation image stored on the stimulable phosphor sheet 50.

As can be understood from the description above, by virtue of the stimulating light cut filter 17 and the protective glass layers 22, the stimulating light L hardly impinges upon the line sensor 20 in this embodiment, whereby a high quality image signal S1 free from noise due to light other than the stimulated emission M can be obtained.

Further, in this particular embodiment, since a back illumination type CCD sensor which is high in quantum efficiency is employed as the photodetector, an image signal which is higher in level can be obtained as compared with when a conventional front illumination type CCD sensor is employed, whereby a higher quality image signal higher in S/N can be obtained.

The second SELFOC lens array 16 may be arranged to be permeable only to light in the wavelength of the stimulated emission M. The stimulable phosphor sheet 50 is sometimes provided with a protective layer for protecting the surface thereof. The protective layer may be arranged to be permeable only to light of the wavelength range of the stimulated emission M.

Though, in the embodiment described above, the line sensor 20 comprises a plurality of rows of photoelectric convertor elements 21 arranged in the direction of conveyance of the stimulable phosphor sheet 50, the line sensor 20 may comprise only a singlerow of photoelectric convertor elements 21 arranged in the longitudinal direction of the line sensor 20.

Further, the line sensor 20 need not be limited to of a back illumination type but may be of a front illumination type.

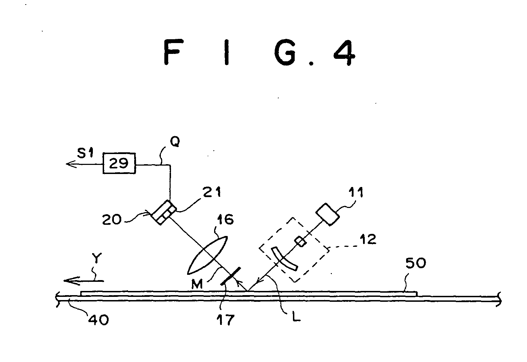

Further, though, in the radiation image read-out apparatus of the embodiment described above, the optical system is arranged so that the path of the stimulating light beams L partly overlaps with the path of the stimulated emission M in order to reduce the overall size of the apparatus, the optical system need not be limited to such an arrangement. For example, an optical system in which the path of the stimulating light beams L does not overlap with the path of the stimulated emission M as shown in Figure 4 may be employed.

That is, the radiation image read-out apparatus in accordance with a second embodiment of the present invention shown in Figure 4 comprises an endless belt 40 for conveying the stimulable phosphor sheet 50, a broad area laser 11 which emits a line stimulating light beam L at about 45° to the surface of the stimulable phosphor sheet 50, an optical system 12which is formed by a combination of a collimator lens which condenses the line stimulating light beam L emitted from the broad area laser 11 and a toric lens which spreads the light beam only in one direction and projects the line stimulating light beam L onto the surface of the stimulable phosphor sheet 50; a SELFOC lens array 16 the optical axis of which is at about 45° to the surface of the stimulable phosphor sheet 50 and about 90° to the direction of travel of the line stimulating light beam L and which converges the stimulated emission M emitted from the stimulable phosphor sheet 50 upon exposure to the stimulating light L onto the light receiving face of a line sensor 20; a stimulating light cut filter 17 which cuts the stimulating light L in the stimulated emission M entering the SELFOC lens array 16; the line sensor 20 which has an array of photoelectric convertor elements 21 which receive the stimulated emission M and convert it into an electric image signal; and an image signal reading means 29 which reads the signals Q from the respective photoelectric convertor elements 21and outputs an image signal S1.

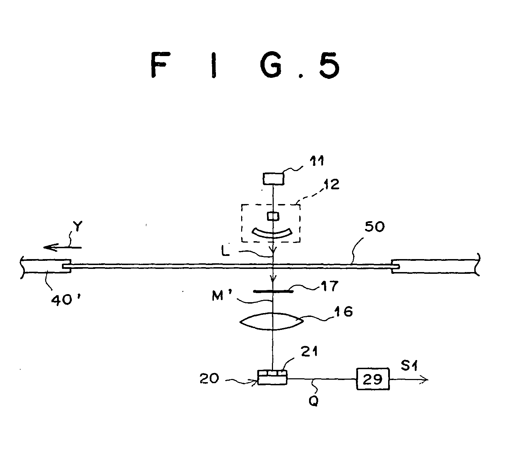

Though, in the first and second embodiments described above, the line stimulating light beam L is projected onto the same surface of the stimulable phosphor sheet 50 as that the line sensor 20 is opposed to, the line stimulating light beam L may be projected onto the surface of the stimulable phosphor sheet 50 opposite to that the line sensor 20 is opposed to as shown in Figure 5. In the latter case, the support film or the substrate on which the stimulable phosphor layer is formed should be transparent to the stimulated emission M.

The radiation image read-out apparatus in accordance with a third embodiment of the present invention shown in Figure 5 comprises an endless belt 40' which conveys the stimulable phosphor sheet 50 in the direction of arrow Y holding the leading end portion and the trailing end portion of the stimulable phosphor sheet 50 (no radiation image is recorded in these areas or if any, the radiation image in these areas is generally not important), a broad area laser 11 which emits a line stimulating light beam L substantially in perpendicular to the surface of the stimulable phosphor sheet 50, an optical system 12which is formed by a combination of a collimator lens which condenses the line stimulating light beam L emitted from the broad area laser 11 and a toric lens which spreads the light beam only in one direction and projects the line stimulating light beam L onto the upper surface of the stimulable phosphor sheet 50; a SELFOC lens array 16 the optical axis of which is at about 90° to the surface of the stimulable phosphor sheet 50 and which converges the stimulated emission M' emitted from the back side of the stimulable phosphor sheet 50 (the side opposite to the side on which the stimulating light beam L impinges) upon exposure to the stimulating light L onto the light receiving face of a line sensor 20; a stimulating light cut filter 17 which cuts the stimulating light L in the stimulated emission M entering the SELFOC lens array 16; the line sensor 20 which has an array of photoelectric convertor elements 21 which receive the stimulated emission M and convert it into an electric signal; and an image signal reading means 29 which reads the signals Q from the respective photoelectric convertor elements 21 and outputs an image signal S.

## Claims

1. A radiation image read-out apparatus comprising a stimulating light beam source which projects astimulating light beam onto a stimulable phosphor sheet storing thereon radiation image information, a photodetector which receives stimulated emission emitted upon exposure to the stimulating light beam from portions of the stimulable phosphor sheet exposed to the stimulating light beam or the back side of the sheet opposed to the portions exposed to the stimulating light beam and converts the amount of stimulated emission to an electric signal, a scanning means which moves the stimulating light beam source and the photodetector relatively to the stimulable phosphor sheet, and an image signal read-out means which reads out the output of photodetector in sequence in the respective positions in which the stimulating light beam and the photodetector are moved by the scanning means, wherein the improvement comprises that
the photodetector comprises a CCD provided with a protective member which is permeable to light in the wavelength band of the stimulated emission and impermeable to light in the wavelength band of the stimulating light.

2. A radiation image read-out apparatus as defined in Claim 1 in which the protective member is permeable only to light in the wavelength band of the stimulated emission.

3. A radiation image read-out apparatus as defined in Claim 1 in which the stimulating light beam source is a line light beam source which projects onto the stimulable phosphor sheet a line stimulating light beam,
the photodetector be a line sensor comprising a plurality of photoelectric convertor elements arranged in the longitudinal direction of the line stimulating light beam projected onto the stimulable phosphor sheet,
the scanning means moves the line light beam source and the line sensor relatively to the stimulable phosphor sheet in a direction different from the longitudinal direction of the line stimulating light beam projected onto the stimulable phosphor sheet, and
the image signal read-out means reads out the output of line sensor in sequence in the respective positions in which the line stimulating light beam source and the line sensor are moved by the scanning means.

4. A radiation image read-out apparatus as defined in Claim 3 in which the line sensor is provided with a plurality of photoelectric convertor elements also in the direction perpendicular to the longitudinal direction of the line stimulating light beam projected onto the stimulable phosphor sheet.

5. A radiation image read-out apparatus as defined in Claim 3 in which a collector optical system including a lens array and collecting the stimulated emission on the light receiving face of the line sensor is disposed between the stimulable phosphor sheet and the line sensor and the lens array is permeable only to light in the wavelength band of the stimulated emission.

6. A radiation image read-out apparatus as defined in Claim 5 in which the lens array is a refractive index profile type lens array.

7. A radiation image read-out apparatus as defined in Claim 1 in which the stimulable phosphor sheet is provided with a protective layer which is permeable only to light of the wavelength range of the stimulated emission.

8. A radiation image read-out apparatus as defined in Claim 1 in which the protective member is antireflection-treated.
